# EUROPEAN PATENT SPECIFICATION

(11) **EP 4 009 690 B1**
(45) Date of publication and mention of the grant of the patent: **14.10.2026**
(21) Application number: 20849196.9
(22) Date of filing: 28.07.2020
(51) Int. Cl.: H04W 24/08, H04W 48/16

(54) **MEASUREMENT METHOD, MEASUREMENT INDICATION METHOD, AND DEVICE**
MESSVERFAHREN, MESSANZEIGEVERFAHREN UND -VORRICHTUNG
PROCÉDÉ DE MESURE, PROCÉDÉ D'INDICATION DE MESURE, ET DISPOSITIF

(30) Priority: 02.08.2019 CN 201910713815
(43) Date of publication of application: 08.06.2022
(73) Proprietor: Vivo Mobile Communication Co., Ltd., Dongguan, Guangdong 523860 (CN)
(72) Inventor: WU, Kai, Dongguan, Guangdong 523860 (CN); CHEN, Li, Dongguan, Guangdong 523860 (CN); SUN, Yanliang, Dongguan, Guangdong 523860 (CN)
(74) Representative: Lavoix
(86) International application number: PCT/CN2020/105192
(87) International publication number: WO 2021/023062

(56) References cited:
- WO-A1-2019/107969
- WO-A1-2019/138500
- CN-A- 110 022 191
- US-A1- 2021 175 985
- VIVO: "Remaining aspects on NR-PBCH", vol. RAN WG1, no. Greece, Athens; 20180226 - 20180302, 15 February 2018 (2018-02-15), XP051396759, Retrieved from the Internet <URL:http://www.3gpp.org/ftp/tsg%5Fran/WG1%5FRL1/TSGR1%5F92/Docs/> [retrieved on 20180215]
- ASBJÖRN GRÖVLEN: "Email discussion: [91-NR-04] RMSI presence indication", INTERNET CITATION, 3 December 2017 (2017-12-03), pages 1 - 13, XP009523625, Retrieved from the Internet <URL:https://list.etsi.org/scripts/wa.exe?A2=3GPP_TSG_RAN_WG1>
- INTEL CORPORATION: "Summary of Offline Discussion for NR Radio Link Monitoring", vol. RAN WG1, no. Busan, South Korea; 20180521 - 20180525, 23 May 2018 (2018-05-23), XP051442791, Retrieved from the Internet <URL:http://www.3gpp.org/ftp/Meetings%5F3GPP%5FSYNC/RAN1/Docs/> [retrieved on 20180523]
- CATT: "Discussion on applicability for intra-frequency measurement", 3GPP DRAFT; R4-1710470 APPLICABILITY FOR INTRA-FREQUENCY MEASUREMENT, vol. RAN WG4, 2 October 2017 (2017-10-02), Dubrovnik, Croatia, pages 1 - 3, XP051357380

## Description

### TECHNICAL FIELD

Embodiments of the present disclosure relate to the field of communications technologies, and specifically, to a measurement method, a measurement indication method, and a device.

### BACKGROUND

In a case that a bandwidth of a downlink activated bandwidth part (Bandwidth part, BWP) received by a user equipment (User Equipment, UE) does not include a cell defining (cell defining) Synchronization Signal and PBCH block (Synchronization Signal and PBCH block, SSB) of a terminal (for example, a UE), the terminal fails to perform measurement at a current BWP, and needs to jump to a frequency of an SSB for measurement. This causes frequent retuning of a receiving frequency of the terminal, resulting in discontinuous downlink reception.

WO2019107969A1 discloses a method for measuring signal quality by a communication device in a wireless communication system, the method comprising: receiving information on a plurality of frequencies for transmitting synchronization signal block (SSB); and based on that a first bandwidth part (BWP) among a plurality of BWPs configured for the communication device is activated and the first BWP includes at least one frequency among the plurality of frequencies, measuring the signal quality based on at least one SSB transmitted at the frequency included in the first BWP.

### SUMMARY

The present invention is defined by a measurement method, a measurement indication method, a terminal and a network device as defined in the appended set of claims.

### BRIEF DESCRIPTION OF DRAWINGS

It becomes clear for a person of ordinary skill in the art to learn various other advantages and benefits by reading detailed description of the following optional implementations. Accompanying drawings are used for showing the optional implementations. In addition, in all the accompanying drawings, same reference numerals are used to indicate the same component. In the accompanying drawings:
FIG. 1 is a schematic architectural diagram of a wireless communications system according to an embodiment of the present disclosure;
FIG. 2 is a first flowchart of a measurement method according to an embodiment of the present disclosure;
FIG. 3 is a second flowchart of a measurement indication method according to an embodiment of the present disclosure;
FIG. 4 is a schematic diagram of transmission at a first SSB and a second SSB;
FIG. 5 is a schematic diagram of a terminal according to an embodiment of the present disclosure.
FIG. 6 is a schematic diagram of a network device according to an embodiment of the present disclosure; and
FIG. 7 is a schematic diagram of a communications device according to an embodiment of the present disclosure.

### DETAILED DESCRIPTION OF EMBODIMENTS

For ease of understanding the embodiments of the present disclosure, several technical points are first described:
(1) For a release-15 (Rel-15) UE, an SSB at which the UE performs SSB-based intra-frequency measurement is a cell defining SSB of a serving cell of the UE. At which a measurement SSB for link quality monitoring of a cell and a beam is also the cell defining SSB of the serving cell.
   Further, the cell defining SSB is an SSB associated with remaining minimum system information (Remaining Minimum System Information, RMSI), and is on a synchronization raster (synchronization raster).
(2) A network may send, on one carrier, a plurality of SSBs that are on the synchronization raster. All the SSBs are associated with the RMSI. Each SSB corresponds to one independent cell. Physical-layer cell IDs (for example, physical cell identifiers (Physical Cell Identifier, PCI)) corresponding to these SSBs may be the same as or different from one another, but higher-layer cell indexes are different.
(3) For measurement of a second SSB at a frequency different from that of the cell defining SSB (or referred to as a first SSB) of the serving cell belongs to inter-frequency measurement. The inter-frequency measurement requires a measurement gap (measurement gap). In the measurement gap, the UE fails to perform other reception behavior different from measurement behavior.
(4) In a case that a network switches from a BWP including the cell defining SSB of the UE to a BWP that does not include the SSB but includes the second SSB, because the second SSB belongs to another cell, a result measured by definition belongs to measurement results of the another cell, but does not belong to measurement results of the serving cell. In a case that the UE returns to a position of the cell defining SSB for measurement, a frequency needs to be adjusted for reception, and reception of a currently activated downlink BWP is interrupted. In a case that the UE switches to the second SSB and uses the second SSB as a measurement SSB of the serving cell of the UE, a process of switching between inter-frequency cells needs to be performed, and the process is reflectively complex.

The network may use a same base station to transmit SSBs at different frequency positions of one carrier. Therefore, in this case, channel environments of the SSBs are similar, and another SSB may be used for RRM measurement.

However, a protocol in the related art does not support this measurement behavior. In the embodiments of the present disclosure, the network may deliver indication information, to indicate that the UE can use an SSB at another frequency position as an SSB for RRM measurement of the serving cell, which simplifies measurement and reception behavior of the UE.

The following clearly and completely describes the technical solutions in the embodiments of the present disclosure with reference to the accompanying drawings in the embodiments of the present disclosure. Apparently, the described embodiments are merely some rather than all of the embodiments of the present disclosure.

The term "include" and any other variants in the specification and claims of the present disclosure are intended to cover a non-exclusive inclusion, for example, a process, method, system, product, or device that includes a list of steps or units is not necessarily limited to those expressly listed steps or units, but may include other steps or units not expressly listed or inherent to such a process, method, product, or device. In addition, "and/or" used in the specification and claims means at least one of the connected objects. For example, A and/or B represents the following three cases: Only A exists, only B exists, and both A and B exist.

In the embodiments of the present disclosure, the term such as "exemplary" or "for example" is used to represent giving an example, an illustration, or a description. Any embodiment or design scheme described as "exemplary" or "for example" in the embodiments of the present disclosure should not be construed as being more preferred or advantageous than other embodiments or design schemes. To be precise, the use of the term such as "exemplary" or "for example" is intended to present a related concept in a specific manner.

The technology described herein is not limited to a long time evolution (Long Time Evolution, LTE)/LTE-Advanced (LTE-Advanced, LTE-A) system, and can also be used in various wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems.

The terms "system" and "network" are often used interchangeably. The CDMA system can implement radio technologies such as CDMA2000 and universal terrestrial radio access (Universal Terrestrial Radio Access, UTRA). UTRA includes wideband CDMA (Wideband Code Division Multiple Access, WCDMA) and other CDMA variants. A TDMA system can implement radio technologies such as the global system for mobile communications (Global System for Mobile Communication, GSM). The OFDMA system can implement radio technologies such as ultra mobile broadband (Ultra Mobile Broadband, UMB), evolved UTRA (Evolved-UTRA, E-UTRA), IEEE 802.11 (Wi-Fi), IEEE 802.16 (WiMAX), IEEE 802.20, and Flash-OFDM. UTRA and E-UTRA are parts of a universal mobile telecommunications system (Universal Mobile Telecommunications System, UTMS). LTE and advanced LTE (for example, LTE-A) are new UMTS versions that use E-UTRA. UTRA, E-UTRA, UMTS, LTE, LTE-A, and GSM are described in documents from an organization named "3rd Generation Partnership Project" (3rd Generation Partnership Project, 3GPP). CDMA2000 and UMB are described in documents from an organization named "3rd Generation Partnership Project 2" (3GPP2). The technology described in this specification can be used in the foregoing systems and radio technologies as well as other systems and radio technologies.

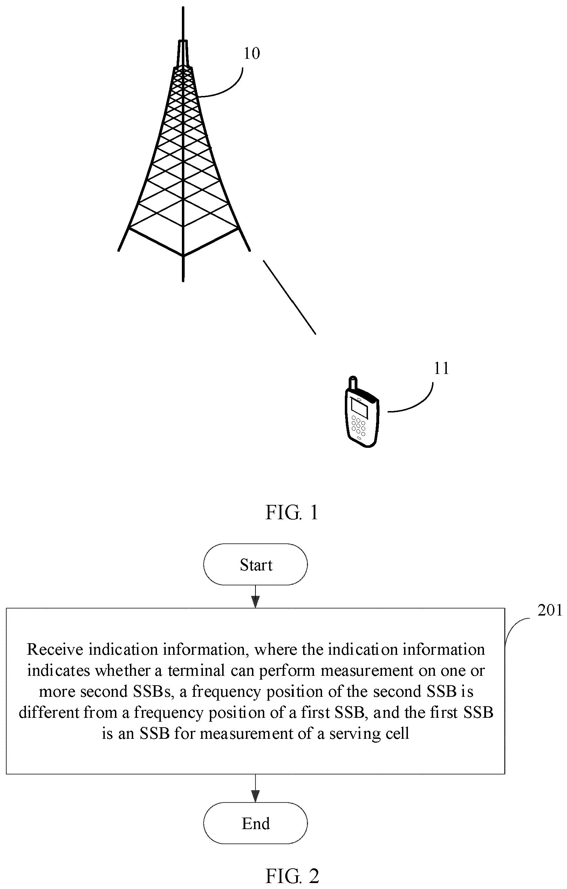

The embodiments of the present disclosure are described below with reference to the accompanying drawings. A measurement method, a measurement indication method, and a device provided in the embodiments of the present disclosure can be applied to a wireless communications system. FIG. 1 is a schematic architectural diagram of a wireless communications system according to an embodiment of the present disclosure. As shown in FIG. 1, the wireless communications system may include: a network device 10 and a terminal device. The terminal device may be denoted as a UE 11, and the UE 11 may communicate with the network device 10 (to transmit signaling or transmit data). In actual application, a connection between the devices may be a wireless connection. For ease of visually indicating a connection relationship between the devices, a solid line is used for illustration in FIG. 1. It should be noted that the foregoing communications system can include a plurality of UEs 11, and the network device 10 can communicate with the plurality of UEs 11.

The terminal device provided in the embodiments of the present disclosure may be a mobile phone, a tablet computer, a notebook computer, an ultra-mobile personal computer (Ultra-Mobile Personal Computer, UMPC), a netbook, a personal digital assistant (Personal Digital Assistant, PDA), a mobile Internet device (Mobile Internet Device, MID), a wearable device (Wearable Device), an in-vehicle device, or the like.

The network device 10 provided in the embodiments of the present disclosure may be a base station. The base station may be a commonly used base station, or may be an evolved nodeB (evolved node base station, eNB), or may be a device such as a network device (for example, a next generation nodeB (next generation node base station, gNB) or a transmission and reception point (transmission and reception point, TRP)) in a 5G system.

Referring to FIG. 2, an embodiment of the present disclosure provides a measurement method. The method is performed by a terminal and specifically includes step 201.

Step 201: receive indication information, where the indication information indicates whether the terminal can perform measurement at one or more second SSBs, a frequency position of the second SSB is different from a frequency position of a first SSB, and the first SSB is an SSB for measurement of a serving cell, for example, a cell defining SSB of the serving cell. The cell defining SSB is an SSB associated with RMSI.

It may be understood that, the first SSB and the second SSB are sent from a same network device. Channel environments of the first SSB and the second SSB are basically the same. It can be considered that quality of a cell link can be reflected by using a measurement result of any SSB.

It may be understood that the indication information may explicitly or implicitly indicate whether the terminal can perform the measurement on the one or more second SSBs.

In some implementations, the indication information includes a quasi co-located (QCL) relationship between the second SSB and the first SSB. The QCL relationship between the second SSB and the first SSB implicitly indicates that the terminal can perform the measurement on the one or more second SSBs.

In some implementations, the indication information is received via higher layer signaling, a first medium access control layer-control element (Medium Access Control layer-Control Element, MAC-CE), or first downlink control information (Downlink Control Information, DCI). Further, the first DCI is DCI indicating that the terminal switches between BWPs; and/or the first MAC-CE is an MAC-CE indicating an activated secondary cell (Secondary Cell, Scell) of the terminal.

In some implementations, the measurement on the one or more second SSBs includes: measurement of a serving cell on the one or more second SSBs, or intra-frequency measurement on the one or more second SSBs.

In some implementations, the measurement of the serving cell includes one or more of the following:
(1) RRM measurement of the serving cell;
(2) layer 1-reference signal received power (L1-RSRP) measurement of the serving cell; and
(3) measurement for radio link monitoring for a cell or beam of the serving cell.

In some implementations, the intra-frequency measurement includes one or more of the following:
(1) RRM measurement of the serving cell;
(2) cell searching or discovery; and
(3) RRM measurement of a non-serving cell.

Measurement configuration of the second SSB is the same as measurement configuration of the first SSB. In other words, there is no explicit configuration of the second SSB. When the terminal receives the indication information, it is assumed that the configuration of the second SSB is the same as the configuration of the first SSB.

In some implementations, before or after step 201, the method may further include:
receiving measurement configuration of the second SSB, for example, receiving the measurement configuration of the second SSB via higher layer signaling; receiving the measurement configuration of the second SSB via a second MAC-CE; or receiving the measurement configuration of the second SSB via second DCI.

Further, the second DCI is DCI indicating that the terminal switches between BWPs; and/or the second MAC-CE is an MAC-CE indicating an activated Scell of the terminal.

The measurement configuration of the second SSB includes one or more of the following:
(1) SSB-based RRM measurement timing configuration (SSB-based RRM measurement timing configuration, SMTC); and
(2) SSB index (index) configuration for transmitting an SSB.
   Optionally, the measurement configuration of the second SSB may further include:
(3) SSB power configuration.

In some implementations, the measurement configuration of the second SSB includes one or more of the following:
(1) an SSB index for detecting link quality;
(2) a measurement period;
(3) a parameter of a timer or counter for radio link failure, for example, the counter is an n310 or n311 counter, and the timer is a T310 or T311 timer; and
(4) a parameter of a counter or timer for beam failure detection.

In some implementations, in a case that the second SSB is within the BWP of the terminal, where the indication information indicates whether the terminal can perform the measurement on the one or more second SSBs.

In some implementations, after step 201, the method further includes:
in a case that the activated BWP of the terminal includes the first SSB and the second SSB, performing the measurement at the frequency position of the first SSB and the frequency position of the second SSB respectively, to obtain a first measured value and a second measured value; and
performing filtering on the first measured value and the second measured value, to obtain a joint measured value. The filtering is weighted summation performed on the first measured value and the second measured value, for example, the first measured value and the second measured value are averaged, to obtain a joint measured value.

In some implementations, after step 201, the method further includes:
in a case that the indication information indicates that the terminal can perform the measurement on the one or more second SSBs, switching, by the terminal, to the frequency position of the second SSB for the measurement.

In some implementations, after the switching, by the terminal, to the frequency position of the second SSB for the measurement, the method further includes:
in a case that the measurement includes the RRM measurement of the serving cell and/or the RRM measurement of the non-serving cell, performing one or more of the following:
(1) performing L3 filtering based on a measurement result of the second SSB and a measurement result of the first SSB, to obtain an L3-RRM measurement result; or
(2) discarding a measurement result of the first SSB, and performing L3 filtering based on a measurement result of the second SSB, to obtain an L3-RRM measurement result.

In some implementations, after the switching, by the terminal, to the frequency position of the second SSB for the measurement, the method further includes:
in a case that the measurement includes the measurement for the radio link monitoring for the cell or beam of the serving cell, performing one or more of the following:
(1) continuing using a currently running counter or timer; or
(2) restarting a current counter or timer.

In some implementations, before or after step 201, the method further includes:
reporting a measurement capability of the terminal, where the measurement capability includes: a quantity of frequencies of SSBs at which RRM measurement is performed in a receiving bandwidth of the terminal, and/or a quantity of frequencies of SSBs at which cell searching is performed in the receiving bandwidth of the terminal.

In the embodiments of the present disclosure, the terminal may perform RRM measurement at a non-cell defining SSB in a BWP at which downlink reception is currently performed, which reduces interruption of data transmission, and improves flexibility of measurement behavior of the terminal.

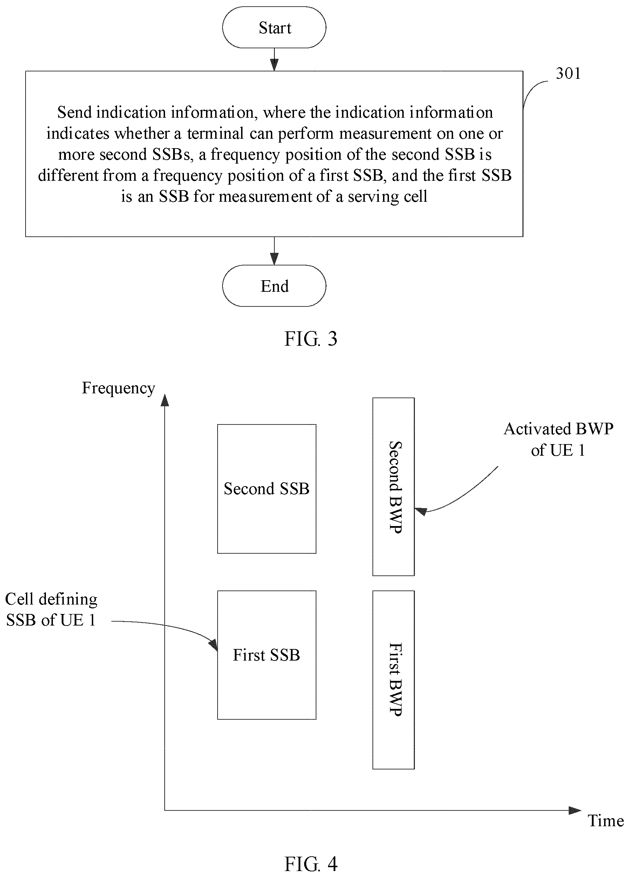

Referring to FIG. 3, an embodiment of the present disclosure provides a measurement indication method. The method is performed by a network device and specifically includes step 301.

Step 301: Send indication information, where the indication information indicates whether a terminal can perform measurement at one or more second SSBs, a frequency position of the second SSB is different from a frequency position of a first SSB, and the first SSB is an SSB for measurement of a serving cell, for example, a cell defining SSB. Further, the cell defining SSB is an SSB associated with RMSI.

In some implementations, the indication information includes a QCL relationship between the second SSB and the first SSB. The QCL relationship between the second SSB and the first SSB implicitly indicates that the terminal can perform the measurement on the one or more second SSBs.

In some implementations, the indication information is sent via higher layer signaling, a first MAC-CE, or first DCI. Further, the first DCI is DCI indicating that the terminal switches between BWPs; and/or the first MAC-CE is an MAC-CE indicating an activated Scell of the terminal.

In some implementations, the measurement on the one or more second SSBs includes: measurement of a serving cell on the one or more second SSBs, or intra-frequency measurement on the one or more second SSBs.

In some implementations, the measurement of the serving cell includes one or more of the following:
(1) RRM measurement of the serving cell;
(2) layer 1-reference signal received power (L1-RSRP) measurement of the serving cell; and
(3) measurement for radio link monitoring for a cell or beam of the serving cell.

In some implementations, the intra-frequency measurement includes one or more of the following:
(1) RRM measurement of the serving cell;
(2) cell searching or discovery; and
(3) RRM measurement of a non-serving cell.

Measurement configuration of the second SSB is the same as measurement configuration of the first SSB. In other words, in the embodiments of the present disclosure, there may be no explicit configuration of the second SSB. When the terminal receives the indication information, it is assumed that the configuration of the second SSB is the same as the configuration of the first SSB.

In some implementations, before or after step 301, the method further includes:
sending measurement configuration of the second SSB, for example, sending the measurement configuration of the second SSB via higher layer signaling; sending the measurement configuration of the second SSB via a second MAC-CE; or sending the measurement configuration of the second SSB via second DCI. Further, the second DCI is DCI indicating that the terminal switches between BWPs; and/or the second MAC-CE is an MAC-CE indicating an activated Scell of the terminal.

The measurement configuration of the second SSB includes one or more of the following:
(1) SMTC; and
(2) SSB index configuration for transmitting an SSB.
   Optionally, the measurement configuration of the second SSB may further include:
(3) SSB power configuration.

In some implementations, the measurement configuration of the second SSB includes one or more of the following:
(1) an SSB index for detecting link quality;
(2) a measurement period;
(3) a parameter of a timer or counter for radio link failure; and
(4) a parameter of a counter or timer for beam failure detection.

In some implementations, in a case that the second SSB is within the BWP of the terminal, where the indication information indicates whether the terminal can perform the measurement on the one or more second SSBs.

In some implementations, before or after step 301, the method further includes:
receiving a measurement capability of the terminal, where the measurement capability includes: a quantity of frequencies of SSBs at which RRM measurement is performed in a receiving bandwidth of the terminal, and/or a quantity of frequencies of SSBs at which cell searching is performed in the receiving bandwidth of the terminal.

In the embodiments of the present disclosure, the terminal may perform RRM measurement at a non-cell defining SSB in a BWP at which downlink reception is currently performed, which reduces interruption of data transmission, and improves flexibility of measurement behavior of the terminal.

A process of the measurement method described in embodiments 1 to 4 of the present disclosure is described below with reference to FIG. 3.

As shown in FIG. 3, transmission of a plurality of SSBs is performed on a carrier of a base station (next Generation Node B, gNB). In a case that UE #1 accesses to a network via reception of SSB 1 (or referred to as a first SSB or 1-st SSB) and RMSI associated with SSB 1, SSB 1 is a cell defining SSB of UE #1. A frequency position of SSB 2 (or referred to as a second SSB or 2-nd SSB) is different from a frequency position of SSB 1. Although SSB 2 is also associated with RMSI, SSB 2 is not a cell defining SSB of UE #1. SSB 1 and SSB 2 correspond to different cells. However, actually, the two SSBs are sent from a same base station. Channel environments of the two SSBs are basically the same. It can be considered that quality of a cell link can be reflected by using a measurement result of any SSB.

In a case that the UE performs downlink reception at BWP 1 (or referred to as a first BWP or 1-st BWP), frequency retuning (retuning) does not need to be performed when the UE performs serving cell and neighboring cell measurement at a frequency of SSB 1.

A network may perform switching between BWPs at which the UE works. For example, a BWP at which the UE performs reception is switched to BWP 2 (or referred to as a second BWP or 2-nd BWP). SSB 1 (namely, the cell defining SSB of the UE) is not included in a frequency range of BWP 2. Strictly, SSB #2 included in the frequency range is an SSB of another cell, because the UE fails to determine the following:
(1) whether SSBs at the frequency position include an SSB transmitted by a base station transmitting SSB #1; and
(2) whether measurement for another intra-frequency cell can be performed at the frequency position as same as a position of SSB #1.

Therefore, the UE fails to directly perform SSB-based measurement at the frequency position. In this case, any one or more of embodiments 1 to 4 can be selected and performed.

### Embodiment 1

The network may deliver indication information. The indication information indicates whether the UE can perform serving cell measurement at a frequency of another SSB. Therefore, in a case that the UE is switched to a BWP that does not include SSB #1, another SSB can be used for the measurement.

In a case that SSBs at the frequency position include a second SSB transmitted by the base station transmitting SSB #1, the UE can perform the serving cell measurement based on the second SSB, or the measurement further includes intra-frequency neighboring cell measurement at the frequency.

Further, the network may also indicate, via the indication information, whether SSB-based intra-frequency neighboring cell measurement can be performed at the frequency. After receiving the indication information, the UE can perform the intra-frequency neighboring cell measurement at the frequency.

Further, the indication information may be transmitted via higher layer signaling.

### Embodiment 2

The network may indicate, via the DCI, whether the UE can perform the serving cell measurement and/or the intra-frequency neighboring cell measurement at the frequency.

For example, DCI indicating BWP switching is performed also indicates that the serving cell measurement and/or the intra-frequency neighboring cell measurement are performed.

### Embodiment 3

The network performs indication of the serving cell measurement and/or the intra-frequency neighboring cell measurement in a non-explicit (implicit) manner. In a current Rel-15 protocol, QCL indication of SSBs at different frequencies is not supported.

Further, the network may indicate a QCL relationship among SSBs at different frequency positions. In a case that the UE receives QCL indication for SSBs at two frequency positions, the UE may use a measurement result of an SSB at any of the frequency positions as a link measurement result of the serving cell. Further, the UE may perform intra-frequency measurement at the frequency.

### Embodiment 4

After switching to the frequency position of the second SSB for the measurement, the UE performs the following a or b:
a) In a case that the measurement is RRM measurement, the UE performs one or more of the following:
   i. The UE performs L3 filtering based on both a measurement result of the second SSB and a measurement result of the first SSB, to obtain an L3-RRM measurement result.
   ii. The UE discards a measurement result of the first SSB, and performs L3 filtering based on a measurement result of the second SSB, to obtain an L3-RRM measurement result.
b) In a case that the measurement is measurement for cell or beam radio link monitoring, the UE performs one or more of the following:
   i. The UE continues using a currently running counter or timer.
   ii. The UE restarts a current counter or timer.

Further, the measurement result includes one or more of the following: reference signal receiving power (Reference Signal Receiving Power, RSRP), reference signal receiving quality (Reference Signal Receiving Quality, RSRQ), a received signal strength indicator (Received Signal Strength Indicator, RSSI), a signal to interference plus noise ratio (Signal to Interference plus Noise Ratio, SINR), or the like.

Further, the counter for radio link quality of the cell is an n310 or n311 counter; and the timer is a T310 or T311 timer.

Further, the counter for radio link quality of the beam is a counter for beam failure detection; and the timer is a timer for beam failure detection.

An embodiment of the present disclosure further provides a terminal. A principle of solving a problem by the terminal is similar to that of the measurement method in the embodiments of the present disclosure. Therefore, for implementation of the terminal, reference may be made to the implementation of the method, and details are not repeated again.

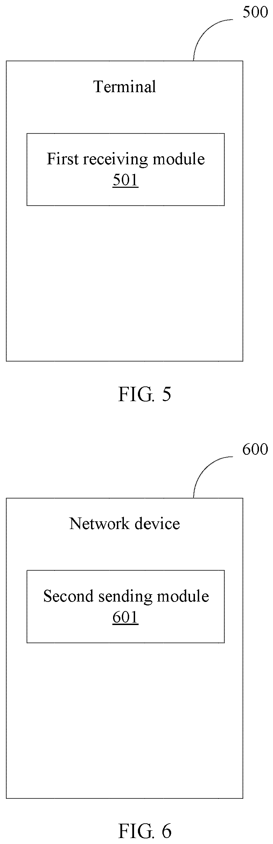

Referring to FIG. 5, an embodiment of the present disclosure further provides a terminal. The terminal 500 includes a first receiving module 501. The first receiving module 501 is configured to receive indication information, where the indication information indicates whether the terminal can perform measurement at one or more second SSBs, a frequency position of the second SSB is different from a frequency position of a first SSB, and the first SSB is an SSB for measurement of a serving cell.

In some implementations, the indication information includes a QCL relationship between the second SSB and the first SSB. The QCL relationship between the second SSB and the first SSB implicitly indicates that the terminal can perform the measurement on the one or more second SSBs.

It may be understood that the indication information may explicitly or implicitly indicate whether the terminal can perform the measurement on the one or more second SSBs.

In some implementations, the indication information is received via higher layer signaling, a first MAC-CE, or first DCI. Further, the first DCI is DCI indicating that the terminal switches between BWPs; and/or the first MAC-CE is an MAC-CE indicating an activated Scell of the terminal.

In some implementations, the measurement on the one or more second SSBs includes: measurement of a serving cell on the one or more second SSBs, or intra-frequency measurement on the one or more second SSBs.

In some implementations, the measurement of the serving cell includes one or more of the following:
(1) RRM measurement of the serving cell;
(2) L1-RSRP measurement of the serving cell; and
(3) measurement for radio link monitoring for a cell or beam of the serving cell.

In some implementations, the intra-frequency measurement includes one or more of the following:
(1) RRM measurement of the serving cell;
(2) cell searching or discovery; and
(3) RRM measurement of a non-serving cell.

Measurement configuration of the second SSB is the same as measurement configuration of the first SSB. In other words, in the embodiments of the present disclosure, there may be no explicit configuration of the second SSB. When the terminal receives the indication information, it is assumed that the configuration of the second SSB is the same as the configuration of the first SSB.

In some implementations, the first receiving module 501 is further configured to receive measurement configuration of the second SSB, for example, receiving the measurement configuration of the second SSB via higher layer signaling; receiving the measurement configuration of the second SSB via a second MAC-CE; or receiving the measurement configuration of the second SSB via second DCI.

Further, the second DCI is DCI indicating that the terminal switches between BWPs; and/or the second MAC-CE is an MAC-CE indicating an activated Scell of the terminal.

The measurement configuration of the second SSB includes one or more of the following:
(1) SMTC; and
(2) SSB index configuration for transmitting an SSB.
   Optionally, the measurement configuration of the second SSB may further include:
(3) SSB power configuration.

In some implementations, the measurement configuration of the second SSB includes one or more of the following:
(1) an SSB index for detecting link quality;
(2) a measurement period;
(3) a parameter of a timer or counter for radio link failure; and
(4) a parameter of a counter or timer for beam failure detection.

In some implementations, in a case that the second SSB is within the BWP of the terminal, where the indication information indicates whether the terminal can perform the measurement on the one or more second SSBs.

In some implementations, the terminal 500 further includes a first measurement module. The first measurement module is configured to: in a case that the activated BWP of the terminal includes the first SSB and the second SSB, perform the measurement at the frequency position of the first SSB and the frequency position of the second SSB respectively, to obtain a first measured value and a second measured value; and perform filtering on the first measured value and the second measured value, to obtain a joint measured value.

In some implementations, the terminal 500 further includes a second measurement module. The second measurement module is configured to: in a case that the indication information indicates that the terminal can perform the measurement on the one or more second SSBs, switch to the frequency position of the second SSB for the measurement.

In some implementations, after the terminal switches to the frequency position of the second SSB for measurement, the second measurement module is further configured to:
in a case that the measurement includes the RRM measurement of the serving cell and/or the RRM measurement of the non-serving cell, perform one or more of the following:
(1) perform L3 filtering based on a measurement result of the second SSB and a measurement result of the first SSB, to obtain an L3-RRM measurement result; or
(2) discard a measurement result of the first SSB, and perform L3 filtering based on a measurement result of the second SSB, to obtain an L3-RRM measurement result.

In some implementations, after the terminal switches to the frequency position of the second SSB for the measurement, the second measurement module is further configured to:
in a case that the measurement includes the measurement for the radio link monitoring for the cell or beam of the serving cell, perform one or more of the following:
(1) continue using a currently running counter or timer; or
(2) restart a current counter or timer.

In some implementations, the terminal 500 further includes a first sending module. The first sending module is configured to report a measurement capability of the terminal, where the measurement capability includes: a quantity of frequencies of SSBs at which RRM measurement is performed in a receiving bandwidth of the terminal, and/or a quantity of frequencies of SSBs at which cell searching is performed in the receiving bandwidth of the terminal.

The terminal provided in this embodiment of the present disclosure may perform the foregoing embodiment shown in FIG. 2. An implementation principle and a technical effect of the terminal are similar to those of the method embodiment, and details are not described again in this embodiment.

An embodiment of the present disclosure further provides a network device. Because a problem resolving principle of the network device is similar to that of the measurement indication method in the embodiments of the present disclosure, for implementation of the network device, reference may be made to implementation of the method, and repeated parts are not described.

Referring to FIG. 6, an embodiment of the present disclosure further provides a network device. The network device 600 includes a second sending module 601. The second sending module 601 is configured to send indication information, where the indication information indicates whether a terminal can perform measurement at one or more second SSBs, a frequency position of the second SSB is different from a frequency position of a first SSB, and the first SSB is an SSB for measurement of a serving cell.

In some implementations, the indication information includes a QCL relationship between the second SSB and the first SSB. The QCL relationship between the second SSB and the first SSB implicitly indicates that the terminal can perform the measurement on the one or more second SSBs.

In some implementations, the second sending module 601 is further configured to send the indication information via higher layer signaling, a first MAC-CE, or first DCI. Further, the first DCI is DCI indicating that the terminal switches between BWPs; and/or the first MAC-CE is an MAC-CE indicating an activated Scell of the terminal.

In some implementations, the measurement on the one or more second SSBs includes: measurement of a serving cell on the one or more second SSBs, or intra-frequency measurement on the one or more second SSBs.

In some implementations, the measurement of the serving cell includes one or more of the following:
(1) RRM measurement of the serving cell;
(2) L1-RSRP measurement of the serving cell; and
(3) measurement for radio link monitoring for a cell or beam of the serving cell.

In some implementations, the intra-frequency measurement includes one or more of the following:
(1) RRM measurement of the serving cell;
(2) cell searching or discovery; and
(3) RRM measurement of a non-serving cell.

Measurement configuration of the second SSB is the same as measurement configuration of the first SSB. In other words, in the embodiments of the present disclosure, there may be no explicit configuration of the second SSB. When the terminal receives the indication information, it is assumed that the configuration of the second SSB is the same as the configuration of the first SSB.

In some implementations, the network device 600 further includes a third sending module, configured to send measurement configuration of the second SSB, for example, send the measurement configuration of the second SSB via higher layer signaling; send the measurement configuration of the second SSB via a second MAC-CE; or send the measurement configuration of the second SSB via second DCI. Further, the second DCI is DCI indicating that the terminal switches between BWPs; and/or the second MAC-CE is an MAC-CE indicating an activated Scell of the terminal.

The measurement configuration of the second SSB includes one or more of the following:
(1) SMTC; and
(2) SSB index configuration for transmitting an SSB.
   Optionally, the measurement configuration of the second SSB may further include:
(3) SSB power configuration.

In some implementations, the measurement configuration of the second SSB includes one or more of the following:
(1) an SSB index for detecting link quality;
(2) a measurement period;
(3) a parameter of a timer or counter for radio link failure; and
(4) a parameter of a counter or timer for beam failure detection.

In some implementations, in a case that the second SSB is within the BWP of the terminal, where the indication information indicates whether the terminal can perform the measurement on the one or more second SSBs.

In some implementations, the network device 600 further includes a second receiving module, configured to receive a measurement capability of the terminal, where the measurement capability includes: a quantity of frequencies of SSBs at which RRM measurement is performed in a receiving bandwidth of the terminal, and/or a quantity of frequencies of SSBs at which cell searching is performed in the receiving bandwidth of the terminal.

The network device provided in this embodiment of the present disclosure may perform the foregoing embodiment shown in FIG. 3. An implementation principle and a technical effect of the network device are similar to those of the method embodiment, and details are not described again in this embodiment.

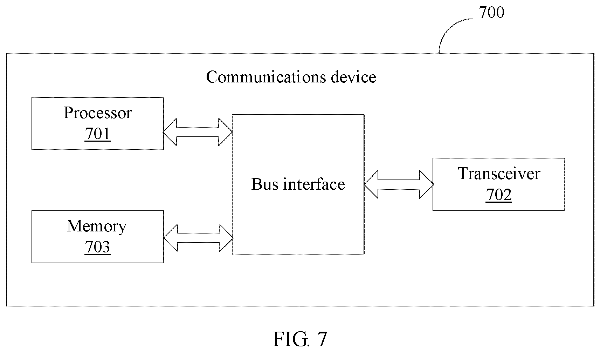

Referring to FIG. 7, FIG. 7 is a structural diagram of a communications device applied in an embodiment of the present disclosure. As shown in FIG. 7, the communications device 700 includes: a processor 701, a transceiver 702, a memory 703, and a bus interface, where the processor 701 may be responsible for bus architecture management and general processing. The memory 703 may store data used by the processor 701 when the processor 701 performs an operation.

In an embodiment of the present disclosure, the network device 700 further includes: a computer program stored in the memory 703 and executable by the processor 701. The computer program, when executed by the processor 701, implements the steps of the methods shown in FIG. 2 and FIG. 3.

In FIG. 7, the bus architecture may include any quantity of interconnected buses and bridges, which are specifically linked together by various circuits of one or more processors represented by the processor 701 and a memory represented by the memory 703. The bus architecture may further link various other circuits such as those of a peripheral device, a voltage regulator, and a power management circuit. These are well known in the art, and therefore are not further described in this specification. The bus interface provides an interface. The transceiver 702 may be a plurality of elements. To be specific, the transceiver 702 includes a transmitter and a receiver, and provides a unit configured to communicate with various other apparatuses on a transmission medium.

The communications device provided in this embodiment of the present disclosure can perform the foregoing method embodiments shown in FIG. 2 and FIG. 3. An implementation principle and a technical effect of the communications device are similar to those of the method embodiments, and details are not described again in this embodiment.

The methods or algorithm steps described with reference to content of the present disclosure may be implemented by using hardware, or may be implemented in a manner in which the processor executes a software instruction. The software instruction may be formed by a corresponding software module. The software module may be stored in a random access memory (Random Access Memory, RAM), a flash memory, a memory (Read-Only Memory, ROM), and an erasable programmable read-only memory (Erasable PROM, EPROM), an electrically erasable programmable read-only memory (Electrically EPROM, EEPROM), a register, a hard disk, a mobile hard disk, a compact disc read-only memory, or a storage medium of any other form known in the art. An exemplary storage medium is coupled to the processor, so that the processor can read information from the storage medium and can write information to the storage medium. Certainly, the storage medium may also be a component of the processor. The processor and the storage medium may be carried in an application specific integrated circuit (application specific integrated circuit, ASIC). In addition, the ASIC may be carried in a core network interface device. Certainly, the processor and the storage medium may exist in the core network interface device as discrete components.

A person skilled in the art should be aware that in the foregoing one or more examples, functions described in the present disclosure may be implemented by hardware, software, firmware, or any combination thereof. When implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any usable medium accessible to a general-purpose or special-purpose computer.

The objectives, technical solutions, and beneficial effects of the present disclosure are further described in detail in the foregoing specific implementations.

A person skilled in the art should understand that the embodiments of the present disclosure can be provided as a method, a system, or a computer program product. Therefore, the embodiments of the present disclosure may be complete hardware embodiments, complete software embodiments, or software-hardware combined embodiments. Moreover, the embodiments of the present disclosure may use a form of a computer program product that is implemented on one or more computer-usable storage media (including but are not limited to a magnetic disk memory, a CD-ROM, an optical memory, and the like) that include computer-usable program code.

The embodiments of the present disclosure are described with reference to the flowcharts and/or block diagrams of the method, the device (system), and the computer program product according to the embodiments of the present disclosure. It should be understood that each process and/or block in the flowchart and/or block diagram as well as a combination of processes and/or blocks in the flowchart and/or block diagram may be implemented by computer program instructions. These computer program instructions can be provided to a general-purpose computer, a special-purpose computer, an embedded processor, or a processor of another programmable data processing device to generate a machine, so that an apparatus configured to implement functions specified in one or more procedures of a flowchart and/or one or more blocks of a block diagram is generated by using the instructions executed by the computer or the processor of the another programmable data processing device.

These computer program instructions can also be stored in a computer-readable memory that can instruct a computer or another programmable data processing device to work in a specific manner, so that an instruction stored in the computer-readable memory generates a product including an instruction apparatus, and the instruction apparatus implements a function specified in one or more processes of the flowchart and/or one or more blocks of the block diagram.

These computer program instructions can also be loaded into a computer or another programmable data processing device, so that a series of operation steps are executed by the computer or the another programmable device to generate processing implemented by the computer, and the instruction executed on the computer or the another programmable device provides steps of functions specified in one or more procedures of a flowchart and/or one or more blocks of a block diagram.

## Claims

1. A measurement method comprising:
receiving, by terminal, indication information, wherein the indication information indicates whether the terminal can perform measurement on one or more second SSBs, wherein performing the measurement on the one or more second SSBs comprises: performing measurement of a serving cell on the one or more second SSBs; wherein,
a frequency position of the second SSB is different from a frequency position of a first SSB, the first SSB is an SSB for measurement of the serving cell, the first SSB is a cell defining SSB, and the second SSB is a non-cell defining SSB;
in a case that the second SSB is in an activated bandwidth part, BWP, of the terminal, the indication information indicates that the terminal can perform the measurement on the one or more second SSBs;
measurement configuration of the second SSB is the same as measurement configuration of the first SSB, and there is no explicit measurement configuration of the second SSB; and
the measurement configuration of the second SSB comprises one or more of:
SSB-based RRM measurement timing configuration, SMTC; and
SSB index configuration for transmitting SSB.

2. The method according to claim 1, wherein
the indication information comprises: a quasi co-located, QCL, relationship between the second SSB and the first SSB, wherein the QCL relationship between the second SSB and the first SSB indicates that the terminal can perform the measurement on the one or more second SSBs.

3. The method according to claim 1, wherein performing the measurement on the one or more second SSBs further comprises: performing intra-frequency measurement on the one or more second SSBs.

4. The method according to claim 3, wherein
the measurement of the serving cell comprises one or more of the following:
radio resource management, RRM, measurement of the serving cell;
layer 1-reference signal received power, L1-RSRP, measurement of the serving cell; and
measurement for radio link monitoring for a cell or beam of the serving cell.
or
the intra-frequency measurement comprises one or more of the following:
RRM measurement of the serving cell;
cell searching or discovery; and
RRM measurement of a non-serving cell.

5. The method according to any one of claims 1 to 4, further comprising:
in a case that the activated BWP of the terminal comprises the first SSB and the second SSB, performing, by the terminal, the measurement at the frequency position of the first SSB and the frequency position of the second SSB respectively, to obtain a first measured value and a second measured value; and
performing, by the terminal, filtering on the first measured value and the second measured value, to obtain a joint measured value.

6. The method according to claim 1, wherein the method further comprises:
in a case that the indication information indicates that the terminal can perform the measurement on the one or more second SSBs, switching, by the terminal, to the frequency position of the second SSB for the measurement.

7. The method according to claim 6, wherein after the switching, by the terminal, to the frequency position of the second SSB for the measurement, the method further comprises:
in a case that the measurement comprises the RRM measurement of the serving cell and/or the RRM measurement of the non-serving cell, performing one or more of the following:
performing, by the terminal, L3 filtering based on a measurement result of the second SSB and a measurement result of the first SSB, to obtain an L3-RRM measurement result; or
discarding, by the terminal, a measurement result of the first SSB, and performing L3 filtering based on a measurement result of the second SSB, to obtain an L3-RRM measurement result;
or
in a case that the measurement comprises the measurement for the radio link monitoring for the cell or beam of the serving cell, performing one or more of the following:
continuing, by the terminal, using a currently running counter or timer; or
restarting, by the terminal, a current counter or timer.

8. The method according to claim 1, wherein the method further comprises:
reporting, by the terminal, a measurement capability of the terminal, wherein the measurement capability comprises: a quantity of frequencies of SSBs at which RRM measurement is performed in a receiving bandwidth of the terminal, and/or a quantity of frequencies of SSBs at which cell searching is performed in the receiving bandwidth of the terminal.

9. The method according to claim 1, wherein
the measurement configuration of the second SSB further comprises one or more of the following:
SSB power configuration;
an SSB index for detecting link quality;
a measurement period;
a parameter of a timer or counter for radio link failure; and
a parameter of a counter or timer for beam failure detection.

10. A measurement indication method comprising:
sending, by a network device, indication information, wherein the indication information indicates whether a terminal can perform measurement at one or more second SSBs, wherein performing the measurement on the one or more second SSBs comprises: performing measurement of a serving cell on the one or more second SSBs; wherein,
a frequency position of the one or more second SSBs is different from a frequency position of a first SSB, the first SSB is an SSB for measurement of the serving cell, the first SSB is a cell defining SSB, and the second SSB is a non-cell defining SSB;
in a case that the second SSB is in an activated bandwidth part, BWP, of the terminal, the indication information indicates that the terminal can perform the measurement on the one or more second SSBs;
measurement configuration of the second SSB is the same as measurement configuration of the first SSB, and there is no explicit measurement configuration of the second SSB; and
the measurement configuration of the second SSB comprises one or more of:
SSB-based RRM measurement timing configuration, SMTC; and
SSB index configuration for transmitting SSB.

11. A terminal comprising: a first receiving module, configured to receive indication information, wherein the indication information indicates whether the terminal can perform measurement at one or more second SSBs, wherein performing the measurement on the one or more second SSBs comprises: performing measurement of a serving cell on the one or more second SSBs; wherein,
a frequency position of the second SSB is different from a frequency position of a first SSB, the first SSB is an SSB for measurement of a serving cell, the first SSB is a cell defining SSB, and the one or more second SSBs are non-cell defining SSBs;
in a case that the one or more second SSBs is in an activated bandwidth part, BWP, of the terminal, the indication information indicates that the terminal is capable of performing the measurement on the one or more second SSBs;
measurement configuration of the second SSB is the same as measurement configuration of the first SSB, and there is no explicit measurement configuration of the second SSB; and
the measurement configuration of the second SSB comprises one or more of:
SSB-based RRM measurement timing configuration, SMTC; and
SSB index configuration for transmitting SSB.

12. The terminal according to claim 11, wherein
the indication information comprises: a quasi co-located, QCL, relationship between the second SSB and the first SSB, wherein the QCL relationship between the second SSB and the first SSB indicates that the terminal can perform the measurement on the one or more second SSBs.

13. The terminal according to claim 11, wherein performing the measurement on the one or more second SSBs comprises: performing measurement of a serving cell on the one or more second SSBs, or performing intra-frequency measurement on the one or more second SSBs.

14. A network device comprising: a second sending module, configured to send indication information, wherein the indication information indicates whether a terminal can perform measurement at one or more second SSBs, wherein performing the measurement on the one or more second SSBs comprises: performing measurement of a serving cell on the one or more second SSBs; wherein,
a frequency position of the second SSB is different from a frequency position of a first SSB, the first SSB is an SSB for measurement of the serving cell, the first SSB is a cell defining SSB, and the one or more second SSBs are non-cell defining SSBs;
in a case that the one or more second SSBs is in an activated bandwidth part, BWP, of the terminal, the indication information indicates that the terminal is capable of performing the measurement on the one or more second SSBs;
measurement configuration of the second SSB is the same as measurement configuration of the first SSB, and there is no explicit measurement configuration of the second SSB; and
the measurement configuration of the second SSB comprises one or more of:
SSB-based RRM measurement timing configuration, SMTC; and
SSB index configuration for transmitting SSB.

15. The network device according to claim 14, wherein
the indication information comprises: a quasi co-located, QCL, relationship between the second SSB and the first SSB, wherein the QCL relationship between the second SSB and the first SSB indicates that the terminal can perform the measurement on the one or more second SSBs.

## Patentansprüche

1. Ein Messverfahren, umfassend:
Empfangen, durch ein Endgerät, von Angabeinformationen, wobei die Angabeinformationen angeben, ob das Endgerät eine Messung an einem oder mehreren zweiten SSBs durchführen kann, wobei das Durchführen der Messung an dem einen oder den mehreren zweiten SSBs umfasst: Durchführen einer Messung einer versorgenden Zelle an dem einen oder den mehreren zweiten SSBs; wobei
eine Frequenzposition des zweiten SSB von einer Frequenzposition eines ersten SSB verschieden ist, der erste SSB ein SSB für die Messung der versorgenden Zelle ist, der erste SSB ein zellendefinierender SSB ist, und der zweite SSB ein nicht zellendefinierender SSB ist;
in einem Fall, dass der zweite SSB in einem aktivierten Bandbreitenteil, BWP, des Endgeräts ist, die Angabeinformationen angeben, dass das Endgerät die Messung an dem einen oder den mehreren zweiten SSBs durchführen kann;
die Messkonfiguration des zweiten SSB dieselbe wie die Messkonfiguration des ersten SSB ist, und keine explizite Messkonfiguration des zweiten SSB vorliegt; und
die Messkonfiguration des zweiten SSB eines oder mehrere der Folgenden umfasst:
SSB-basierte RRM-Messzeitsteuerungskonfiguration, SMTC; und
SSB-Indexkonfiguration zur SSB-Übertragung.

2. Verfahren nach Anspruch 1, wobei
die Angabeinformationen umfassen: eine quasi-kolokalisierte, QCL-, Beziehung zwischen dem zweiten SSB und dem ersten SSB, wobei die QCL-Beziehung zwischen dem zweiten SSB und dem ersten SSB angibt, dass das Endgerät die Messung an dem einen oder den mehreren zweiten SSBs durchführen kann.

3. Verfahren nach Anspruch 1, wobei das Durchführen der Messung an dem einen oder den mehreren zweiten SSBs ferner umfasst: Durchführen einer Intra-Frequenz-Messung an dem einen oder den mehreren zweiten SSBs.

4. Verfahren nach Anspruch 3, wobei
die Messung der versorgenden Zelle eines oder mehrere der Folgenden umfasst:
Funkressourcenverwaltungs-, RRM, Messung der versorgenden Zelle;
Schicht-1-Referenzsignalempfangsleistungs-, L1-RSRP, Messung der versorgenden Zelle; und
Messung für Funkverbindungsüberwachung für eine Zelle oder einen Strahl der versorgenden Zelle.
oder
die Intra-Frequenz-Messung eines oder mehrere der Folgenden umfasst:
RRM-Messung der versorgenden Zelle;
Zellensuche oder -entdeckung; und
RRM-Messung einer nicht versorgenden Zelle.

5. Verfahren nach einem der Ansprüche 1 bis 4, ferner umfassend:
in einem Fall, dass der aktivierte BWP des Endgeräts den ersten SSB und den zweiten SSB umfasst, Durchführen, durch das Endgerät, der Messung an der Frequenzposition des ersten SSB beziehungsweise der Frequenzposition des zweiten SSB, um einen ersten Messwert und einen zweiten Messwert zu erhalten; und
Durchführen, durch das Endgerät, einer Filterung des ersten Messwerts und des zweiten Messwerts, um einen gemeinsamen Messwert zu erhalten.

6. Verfahren nach Anspruch 1, wobei das Verfahren ferner umfasst:
in einem Fall, dass die Angabeinformationen angeben, dass das Endgerät die Messung an dem einen oder den mehreren zweiten SSBs durchführen kann, Umschalten, durch das Endgerät, auf die Frequenzposition des zweiten SSB für die Messung.

7. Verfahren nach Anspruch 6, wobei nach dem Umschalten, durch das Endgerät, auf die Frequenzposition des zweiten SSB für die Messung, das Verfahren ferner umfasst:
in einem Fall, dass die Messung die RRM-Messung der versorgenden Zelle und/oder die RRM-Messung der nicht versorgenden Zelle umfasst, Durchführen eines oder mehrerer der Folgenden:
Durchführen, durch das Endgerät, von L3-Filterung basierend auf einem Messergebnis des zweiten SSB und einem Messergebnis des ersten SSB, um ein L3-RRM-Messergebnis zu erhalten; oder
Verwerfen, durch das Endgerät, eines Messergebnisses des ersten SSB, und Durchführen von L3-Filterung basierend auf einem Messergebnis des zweiten SSB, um ein L3-RRM-Messergebnis zu erhalten; oder
in einem Fall, dass die Messung die Messung für die Funkverbindungsüberwachung für die Zelle oder den Strahl der versorgenden Zelle umfasst, Durchführen eines oder mehrerer der Folgenden:
Fortsetzen, durch das Endgerät, des Verwendens eines aktuell laufenden Zählers oder Timers; oder Neustarten, durch das Endgerät, eines aktuellen Zählers oder Timers.

8. Verfahren nach Anspruch 1, wobei das Verfahren ferner umfasst:
Melden, durch das Endgerät, einer Messfähigkeit des Endgeräts, wobei die Messfähigkeit umfasst: eine Anzahl von Frequenzen von SSBs, an denen RRM-Messung in einer Empfangsbandbreite des Endgeräts durchgeführt wird, und/oder eine Anzahl von Frequenzen von SSBs, an denen Zellensuche in der Empfangsbandbreite des Endgeräts durchgeführt wird.

9. Verfahren nach Anspruch 1, wobei
die Messkonfiguration des zweiten SSB ferner eines oder mehrere der Folgenden umfasst:
SSB-Leistungskonfiguration;
einen SSB-Index zum Detektieren von Verbindungsqualität;
eine Messperiode;
einen Parameter eines Timers oder Zählers für Funkverbindungsfehler; und
einen Parameter eines Zählers oder Timers für Strahlfehlerdetektion.

10. Messangabeverfahren, umfassend:
Senden, durch eine Netzwerkvorrichtung, von Angabeinformationen, wobei die Angabeinformationen angeben, ob ein Endgerät Messung an einem oder mehreren zweiten SSBs durchführen kann, wobei das Durchführen der Messung an dem einen oder den mehreren zweiten SSBs umfasst: Durchführen von Messung einer versorgenden Zelle an dem einen oder den mehreren zweiten SSBs; wobei,
eine Frequenzposition des einen oder der mehreren zweiten SSBs von einer Frequenzposition eines ersten SSB verschieden ist, der erste SSB ein SSB für Messung der versorgenden Zelle ist, der erste SSB ein zellendefinierender SSB ist, und der zweite SSB ein nicht zellendefinierender SSB ist;
in einem Fall, dass der zweite SSB in einem aktivierten Bandbreitenteil, BWP, des Endgeräts ist, die Angabeinformationen angeben, dass das Endgerät die Messung an dem einen oder den mehreren zweiten SSBs durchführen kann;
die Messkonfiguration des zweiten SSB dieselbe wie die Messkonfiguration des ersten SSB ist, und keine explizite Messkonfiguration des zweiten SSB vorliegt; und
die Messkonfiguration des zweiten SSB eines oder mehrere der Folgenden umfasst:
SSB-basierte RRM-Messzeitsteuerungskonfiguration, SMTC; und
SSB-Indexkonfiguration zur SSB-Übertragung.

11. Ein Endgerät, umfassend: ein erstes Empfangsmodul, das dazu konfiguriert ist, Angabeinformationen zu empfangen, wobei die Angabeinformationen angeben, ob das Endgerät Messung an einem oder mehreren zweiten SSBs durchführen kann, wobei das Durchführen der Messung an dem einen oder den mehreren zweiten SSBs umfasst: Durchführen von Messung einer versorgenden Zelle an dem einen oder den mehreren zweiten SSBs; wobei,
eine Frequenzposition des zweiten SSB von einer Frequenzposition eines ersten SSB verschieden ist, der erste SSB ein SSB für die Messung einer versorgenden Zelle ist, der erste SSB ein zellendefinierender SSB ist, und der eine oder die mehreren zweiten SSBs nicht zellendefinierende SSBs sind;
in einem Fall, dass der eine oder die mehreren zweiten SSBs in einem aktivierten Bandbreitenteil, BWP, des Endgeräts sind, die Angabeinformationen angeben, dass das Endgerät fähig ist, die Messung an dem einen oder den mehreren zweiten SSBs durchzuführen;
die Messkonfiguration des zweiten SSB dieselbe wie die Messkonfiguration des ersten SSB ist, und keine explizite Messkonfiguration des zweiten SSB vorliegt; und
die Messkonfiguration des zweiten SSB eines oder mehrere der Folgenden umfasst:
SSB-basierte RRM-Messzeitsteuerungskonfiguration, SMTC; und
SSB-Indexkonfiguration zur SSB-Übertragung.

12. Endgerät nach Anspruch 11, wobei die Angabeinformationen umfassen: eine quasi-kolokalisierte, QCL-, Beziehung zwischen dem zweiten SSB und dem ersten SSB, wobei die QCL-Beziehung zwischen dem zweiten SSB und dem ersten SSB angibt, dass das Endgerät die Messung an dem einen oder den mehreren zweiten SSBs durchführen kann.

13. Endgerät nach Anspruch 11, wobei das Durchführen der Messung an dem einen oder den mehreren zweiten SSBs umfasst: Durchführen von Messung einer versorgenden Zelle an dem einen oder den mehreren zweiten SSBs, oder Durchführen von Intra-Frequenz-Messung an dem einen oder den mehreren zweiten SSBs.

14. Eine Netzwerkvorrichtung, umfassend ein zweites Sendemodul, das dazu konfiguriert ist, Angabeinformationen zu senden, wobei die Angabeinformationen angeben, ob ein Endgerät Messung an einem oder mehreren zweiten SSBs durchführen kann, wobei das Durchführen der Messung an dem einen oder den mehreren zweiten SSBs Durchführen von Messung einer versorgenden Zelle an dem einen oder den mehreren zweiten SSBs umfasst; wobei,
eine Frequenzposition des zweiten SSB von einer Frequenzposition eines ersten SSB verschieden ist, der erste SSB ein SSB für Messung der versorgenden Zelle ist, der erste SSB ein zellendefinierender SSB ist, und der eine oder die mehreren zweiten SSBs nicht zellendefinierende SSBs sind;
in einem Fall, dass der eine oder die mehreren zweiten SSBs in einem aktivierten Bandbreitenteil, BWP, des Endgeräts sind, die Angabeinformationen angeben, dass das Endgerät fähig ist, die Messung an dem einen oder den mehreren zweiten SSBs durchzuführen;
die Messkonfiguration des zweiten SSB dieselbe wie die Messkonfiguration des ersten SSB ist, und keine explizite Messkonfiguration des zweiten SSB vorliegt; und
die Messkonfiguration des zweiten SSB eines oder mehrere der Folgenden umfasst:
SSB-basierte RRM-Messzeitsteuerungskonfiguration, SMTC; und
SSB-Indexkonfiguration zur SSB-Übertragung.

15. Netzwerkvorrichtung nach Anspruch 14, wobei die Angabeinformationen eine quasi-kolokalisierte, QCL-, Beziehung zwischen dem zweiten SSB und dem ersten SSB umfassen, wobei die QCL-Beziehung zwischen dem zweiten SSB und dem ersten SSB angibt, dass das Endgerät die Messung an dem einen oder den mehreren zweiten SSBs durchführen kann.

## Revendications

1. Un procédé de mesure comprenant :
la réception, par un terminal, d'informations d'indication, les informations d'indication indiquant si le terminal peut effectuer une mesure sur un ou plusieurs deuxièmes SSB, l'exécution de la mesure sur les un ou plusieurs deuxièmes SSB comprenant : l'exécution d'une mesure d'une cellule de desserte sur les un ou plusieurs deuxièmes SSB ; dans lequel,
une position de fréquence du deuxième SSB est différente d'une position de fréquence d'un premier SSB, le premier SSB est un SSB pour une mesure de la cellule de desserte, le premier SSB est un SSB définissant une cellule, et le deuxième SSB est un SSB ne définissant pas une cellule ;
dans un cas où le deuxième SSB est dans une partie de bande passante activée, BWP, du terminal, les informations d'indication indiquent que le terminal peut effectuer la mesure sur les un ou plusieurs deuxièmes SSB ;
la configuration de mesure du deuxième SSB est la même que la configuration de mesure du premier SSB, et il n'y a pas de configuration de mesure explicite du deuxième SSB ; et
la configuration de mesure du deuxième SSB comprend un ou plusieurs parmi :
une configuration de synchronisation de mesure RRM basée sur SSB, SMTC ; et
une configuration d'indice SSB pour transmettre un SSB.

2. Le procédé selon la revendication 1, dans lequel
les informations d'indication comprennent : une relation quasi colocalisée, QCL, entre le deuxième SSB et le premier SSB, dans lequel la relation QCL entre le deuxième SSB et le premier SSB indique que le terminal peut effectuer la mesure sur les un ou plusieurs deuxièmes SSB.

3. Le procédé selon la revendication 1, dans lequel l'exécution de la mesure sur les un ou plusieurs deuxièmes SSB comprend en outre : l'exécution d'une mesure intra-fréquence sur les un ou plusieurs deuxièmes SSB.

4. Le procédé selon la revendication 3, dans lequel
la mesure de la cellule de desserte comprend un ou plusieurs parmi les suivants :
une mesure de gestion des ressources radio, RRM, de la cellule de desserte ;
une mesure de puissance reçue de signal de référence de couche 1, L1-RSRP, de la cellule de desserte ; et
une mesure pour une surveillance de liaison radio pour une cellule ou un faisceau de la cellule de desserte.
ou
la mesure intra-fréquence comprend un ou plusieurs parmi les suivants :
une mesure RRM de la cellule de desserte ;
une recherche ou découverte de cellule ; et
une mesure RRM d'une cellule non de desserte.

5. Le procédé selon l'une quelconque des revendications 1 à 4, comprenant en outre :
dans un cas où la BWP activée du terminal comprend le premier SSB et le deuxième SSB, l'exécution, par le terminal, de la mesure à la position de fréquence du premier SSB et à la position de fréquence du deuxième SSB respectivement, pour obtenir une première valeur mesurée et une deuxième valeur mesurée ; et
l'exécution, par le terminal, d'un filtrage sur la première valeur mesurée et la deuxième valeur mesurée, pour obtenir une valeur mesurée conjointe.

6. Le procédé selon la revendication 1, dans lequel le procédé comprend en outre :
dans un cas où les informations d'indication indiquent que le terminal peut effectuer la mesure sur les un ou plusieurs deuxièmes SSB, le basculement, par le terminal, vers la position de fréquence du deuxième SSB pour la mesure.

7. Le procédé selon la revendication 6, dans lequel après le basculement, par le terminal, vers la position de fréquence du deuxième SSB pour la mesure, le procédé comprend en outre :
dans un cas où la mesure comprend la mesure RRM de la cellule de desserte et/ou la mesure RRM de la cellule non de desserte, l'exécution d'une ou plusieurs parmi les suivantes :
l'exécution, par le terminal, d'un filtrage L3 sur la base d'un résultat de mesure du deuxième SSB et d'un résultat de mesure du premier SSB, pour obtenir un résultat de mesure L3-RRM ; ou
le rejet, par le terminal, d'un résultat de mesure du premier SSB, et l'exécution d'un filtrage L3 sur la base d'un résultat de mesure du deuxième SSB, pour obtenir un résultat de mesure L3-RRM ;
ou
dans un cas où la mesure comprend la mesure pour la surveillance de liaison radio pour la cellule ou le faisceau de la cellule de desserte, l'exécution d'une ou plusieurs parmi les suivantes :
continuer, par le terminal, à utiliser un compteur ou temporisateur actuellement en cours d'exécution ; ou redémarrer, par le terminal, un compteur ou temporisateur actuel.

8. Le procédé selon la revendication 1, dans lequel le procédé comprend en outre :
le rapport, par le terminal, d'une capacité de mesure du terminal, dans lequel la capacité de mesure comprend : une quantité de fréquences de SSB auxquelles une mesure RRM est effectuée dans une bande passante de réception du terminal, et/ou une quantité de fréquences de SSB auxquelles une recherche de cellule est effectuée dans la bande passante de réception du terminal.

9. Le procédé selon la revendication 1, dans lequel
la configuration de mesure du deuxième SSB comprend en outre un ou plusieurs parmi les suivants :
une configuration de puissance de SSB ;
un indice SSB pour détecter une qualité de liaison ;
une période de mesure ;
un paramètre d'un temporisateur ou compteur pour une défaillance de liaison radio ; et
un paramètre d'un compteur ou temporisateur pour une détection de défaillance de faisceau.

10. Un procédé d'indication de mesure comprenant :
l'envoi, par un dispositif de réseau, d'informations d'indication, dans lequel les informations d'indication indiquent si un terminal peut effectuer une mesure au niveau d'un ou plusieurs deuxièmes SSB, dans lequel l'exécution de la mesure sur les un ou plusieurs deuxièmes SSB comprend : l'exécution d'une mesure d'une cellule de desserte sur les un ou plusieurs deuxièmes SSB ; dans lequel,
une position de fréquence des un ou plusieurs deuxièmes SSB est différente d'une position de fréquence d'un premier SSB, le premier SSB est un SSB pour une mesure de la cellule de desserte, le premier SSB est un SSB définissant une cellule, et le deuxième SSB est un SSB ne définissant pas une cellule ;
dans un cas où le deuxième SSB est dans une partie de bande passante activée, BWP, du terminal, les informations d'indication indiquent que le terminal peut effectuer la mesure sur les un ou plusieurs deuxièmes SSB ;
la configuration de mesure du deuxième SSB est la même que la configuration de mesure du premier SSB, et il n'y a pas de configuration de mesure explicite du deuxième SSB ; et
la configuration de mesure du deuxième SSB comprend un ou plusieurs parmi :
une configuration de synchronisation de mesure RRM basée sur SSB, SMTC ; et
une configuration d'indice SSB pour transmettre un SSB.

11. Un terminal comprenant : un premier module de réception, configuré pour recevoir des informations d'indication, dans lequel les informations d'indication indiquent si le terminal peut effectuer une mesure au niveau d'un ou plusieurs deuxièmes SSB, dans lequel l'exécution de la mesure sur les un ou plusieurs deuxièmes SSB comprend : l'exécution d'une mesure d'une cellule de desserte sur les un ou plusieurs deuxièmes SSB ; dans lequel,
une position de fréquence du deuxième SSB est différente d'une position de fréquence d'un premier SSB, le premier SSB est un SSB pour une mesure d'une cellule de desserte, le premier SSB est un SSB définissant une cellule, et les un ou plusieurs deuxièmes SSB sont des SSB ne définissant pas une cellule ;
dans un cas où les un ou plusieurs deuxièmes SSB sont dans une partie de bande passante activée, BWP, du terminal, les informations d'indication indiquent que le terminal est capable d'effectuer la mesure sur les un ou plusieurs deuxièmes SSB ;
la configuration de mesure du deuxième SSB est la même que la configuration de mesure du premier SSB, et il n'y a pas de configuration de mesure explicite du deuxième SSB ; et
la configuration de mesure du deuxième SSB comprend un ou plusieurs parmi :
une configuration de synchronisation de mesure RRM basée sur SSB, SMTC ; et
une configuration d'indice SSB pour transmettre un SSB.

12. Le terminal selon la revendication 11, dans lequel les informations d'indication comprennent : une relation quasi colocalisée, QCL, entre le deuxième SSB et le premier SSB, dans lequel la relation QCL entre le deuxième SSB et le premier SSB indique que le terminal peut effectuer la mesure sur les un ou plusieurs deuxièmes SSB.

13. Le terminal selon la revendication 11, dans lequel l'exécution de la mesure sur les un ou plusieurs deuxièmes SSB comprend : l'exécution d'une mesure d'une cellule de desserte sur les un ou plusieurs deuxièmes SSB, ou l'exécution d'une mesure intra-fréquence sur les un ou plusieurs deuxièmes SSB.

14. Un dispositif de réseau comprenant un second module d'envoi, configuré pour envoyer des informations d'indication, dans lequel les informations d'indication indiquent si un terminal peut effectuer une mesure au niveau d'un ou plusieurs deuxièmes SSB, dans lequel l'exécution de la mesure sur les un ou plusieurs deuxièmes SSB comprend l'exécution d'une mesure d'une cellule de desserte sur les un ou plusieurs deuxièmes SSB ; dans lequel,
une position de fréquence du deuxième SSB est différente d'une position de fréquence d'un premier SSB, le premier SSB est un SSB pour une mesure de la cellule de desserte, le premier SSB est un SSB définissant une cellule, et les un ou plusieurs deuxièmes SSB sont des SSB ne définissant pas une cellule ;
dans un cas où les un ou plusieurs deuxièmes SSB sont dans une partie de bande passante activée, BWP, du terminal, les informations d'indication indiquent que le terminal est capable d'effectuer la mesure sur les un ou plusieurs deuxièmes SSB ;
la configuration de mesure du deuxième SSB est la même que la configuration de mesure du premier SSB, et il n'y a pas de configuration de mesure explicite du deuxième SSB ; et
la configuration de mesure du deuxième SSB comprend un ou plusieurs parmi :
une configuration de synchronisation de mesure RRM basée sur SSB, SMTC ; et
une configuration d'indice SSB pour transmettre un SSB.

15. Le dispositif de réseau selon la revendication 14, dans lequel
les informations d'indication comprennent une relation quasi colocalisée, QCL, entre le deuxième SSB et le premier SSB, dans lequel la relation QCL entre le deuxième SSB et le premier SSB indique que le terminal peut effectuer la mesure sur les un ou plusieurs deuxièmes SSB.
